# EUROPEAN PATENT SPECIFICATION

(11) **EP 2 338 769 B1**
(45) Date of publication and mention of the grant of the patent: **01.05.2013**
(21) Application number: 09425534.6
(22) Date of filing: 24.12.2009
(51) Int. Cl.: B62D 33/067

(54) **Device for the controlled tilting of driver's cabin of a vehicle**
Vorrichtung zum kontrollierten Neigen eines Führerraums eines Fahrzeugs
Dispositif d'inclinaison contrôlée de la cabine de conducteur dans un véhicule

(43) Date of publication of application: 29.06.2011
(73) Proprietor: Iveco S.p.A., 10156 Torino (IT)
(72) Inventor: Stuerner, Johann, 89079 Ulm (DE); Prina, Claudio, 13900 Biella (IT); Bezze, Massimo, 10080 S. Benigno Canavese (IT); De Medici, Lorenzo, 25126 Brescia (IT)
(74) Representative: Borsano, Corrado

(56) References cited:
- US-A- 5 906 248
- US-A1- 2008 265 625

## Description

### Application field of the invention

The present invention relates to a device for the controlled tilting of a driver's cabin of a vehicle.

In particular, the invention is advantageously used for facilitating the controlled tilting of the driver's cabin, in order to allow the direct access to the engine compartment of a transport vehicle, such as, in non-limitative examples, a truck or similar used for commercial or industrial transport, or as a specialty vehicle such as a fire-fighting vehicle.

### Description of the prior art

In the field of commercial or industrial transport or of specialty vehicles, it is known in the art to use vehicles whose driver's cabin is placed over the engine compartment and is mounted so that it can be tilted, generally in a forward direction around a horizontal axis or pivot that is parallel to the front axle, in order to allow an easy and fast access to the engine, during the maintenance operations with the vehicle stationary. An example of a system for the controlled tilting of a cabin is disclosed in US 2008/265625. Said US document is taken as basis for the preamble of independent claim 1. At present, the controlled tilting of the driver's cabin is performed by means of one or two hydraulic cylinders, which are usually fixed, by one end, to a side point of the bottom of the driver's cabin, and, by the opposite end, to the vehicle frame, in order to provoke the cabin tilting by rotating it up to a predetermined limit angle of elevation which corresponds to the maximum allowed tilting. The cylinders may be manually operated or, preferably, they may be operated by means of an appropriate electric motor.

The dimensions of such cylinders must necessarily be such that they can bear the weight, that is usually high, of the driver's cabin.

Moreover, it is necessary that the driver's cabin is reinforced in correspondence of the point where the cylinder is fixed, in order to bear the thrust forces exerted by the cylinder itself, and the dynamic stress drop, which contributes to a further increase the weight of the cabin itself, and which often causes structural twists of the cabin, especially on the side where the cylinder is present, when it is the only one.

### Summary of the invention

The aim of the present invention is therefore to overcome the drawbacks of the prior art described above.

In particular, an aim of the present invention is to provide a device suitable for the controlled tilting of the driver's cabin of a transport vehicle, which is light and easily applicable to the solutions known in the art.

A further aim of the present invention is to provide a device which facilitates the tilting of the driver's cabin of a transport vehicle by means of a dual dynamic action up to the maximum angle of elevation.

According to the present invention a device for tilting the driver's cabin of a transport vehicle according to claim 1 is realized.

The subject of this invention is in particular a device for the controlled tilting of the driver's cabin of a vehicle, and respective vehicle, as described more fully in the claims, which are an integral part of this description.

### Brief description of the Figures

The technical details and the advantages of the invention, according to the purposes mentioned above, will become more clear from the following detailed description given with reference to the figures attached hereto in which a preferred but non-limitative embodiment of the device, together with alternative embodiments, are shown, in which:
- figure 1 is a schematic view, with some parts removed for the sake of clarity, of a preferred embodiment of the device according to the invention applied to a driver's cabin of a transport vehicle, with an enlarged view of a first alternative embodiment of a detail;
- figure 2 shows a perspective schematic view in an enlarged scale of a detail of the device shown in figure 1;
- figure 3 shows a diagram of the forces developed during the tilting of the cabin, and an enlarged view of the pivot around which the cabin rotates;
- figure 4 shows a perspective schematic view in an enlarged scale of an alternative embodiment of the device shown in figure 2.

In the drawings the same reference numbers and letters identify the same elements or components.

### Detailed description of preferred embodiments of the invention

With reference to the attached figures, D generally indicates a device suitable for determining the controlled tilting of a driver's cabin C of a transport vehicle, in order to allow, for example, the access to the engine compartment (known in the art and not shown) that is placed underneath.

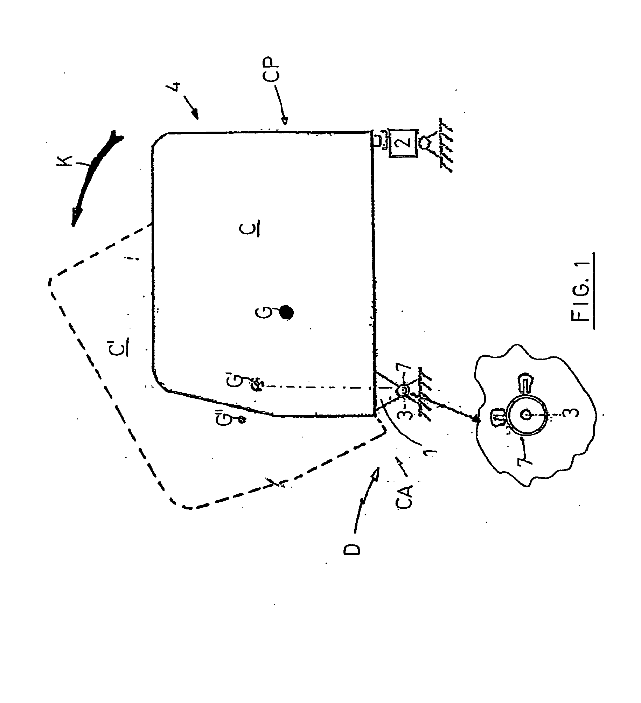

According to what is shown in figure 1, the cabin C, starting from its normal position (indicated by a continuous line) with the rear part CP being fixed to and resting on a retainer 2 fixed to the frame, can be tilted around a horizontal axis or pivot 3, mounted on an appropriate support 1 in correspondence of the front part CA of the cabin C itself, under the thrust of actuator means which are part of the device D and which are schematically indicated by 4 in figure 1.

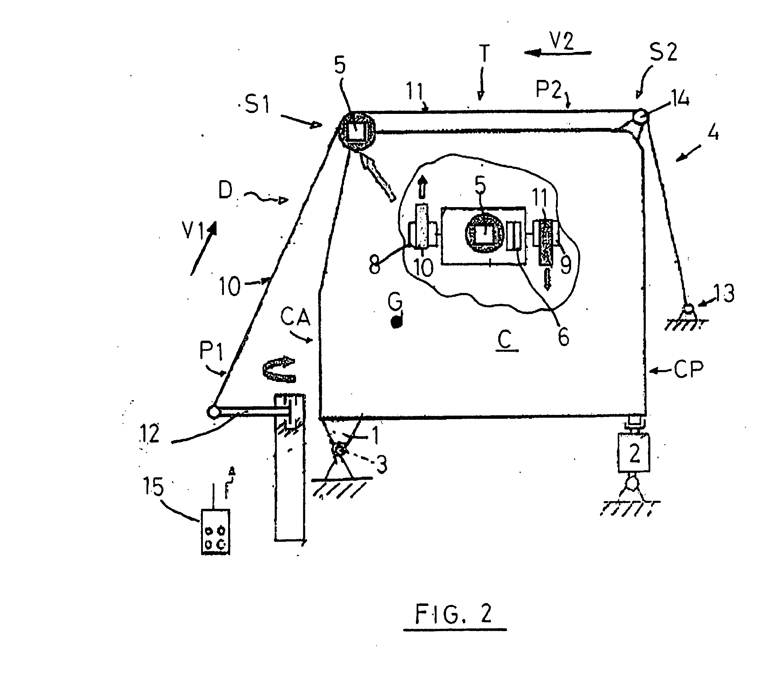

According to what is shown in figure 2, with particular reference to the enlarged view, the actuator means 4 are suitable to act on the cabin C, and comprise in detail: an electric motor 5 connected to a pair of winches 8 and 9, which are mounted in correspondence of a corner S1 of an external part, preferably, but not limited to, a front part, of the roof T of the cabin C.

The winches 8 and 9 are reciprocally disposed on the opposite side with respect to the electric motor 5 itself, and operate in a opposite directions with respect to each other, for example by acting on an appropriate remote control 15: they rotate around their own axis of rotation, under the thrust of the motor 5.

According to what is shown in figure 2, the actuator means 4 further comprise a first driving belt 10 whose first end is fixed to the winch 8, and is partially wrapped around the winch 8 itself, while the opposite end is fixed to a rod 12, preferably mounted in correspondence of the front part CA of the cabin C. A first end of second driving belt 11 is fixed to the winch 9, partially wrapped around the winch 9 itself, while its opposite end is constrained to a fixed support 13 on the frame of the mentioned vehicle, in correspondence of the rear part CP of the cabin C.

Thus, as it can be seen in figure 2, each belt 10, 11 defines a respective slip path P1,P2 around the external profile of the cabin C according to the respective traction direction V1,V2, V1 being opposite to V2, under the thrust of the respective winches 8 and 9: the path P1 is linear, while the path P2 is substantially L-shaped because of the presence of a pair of diverting pulleys 14 placed in correspondence of a corner S2 of an external rear part of the cabin roof C.

In order to compensate for the different lengths of the belts 10 and 11 during the controlled tilting of the cabin C, the actuator means 4 may be provided by a differential gear 6 coupled to the motor 5.

The device D further comprises spring elastic means 7 acting and disposed on the mentioned pivot 3 and suitable for facilitating the tilting of the cabin C which is performed by means of the aforementioned actuators 4 around the horizontal pivot 3 itself.

Specifically, the elastic means 7 are appropriately loaded so that they can assist the thrust of the actuators 4, with the belt 10 pulling (towards V1) and wrapping around the winch 8, for the forward tilting of the cabin C, namely by facilitating the counterclockwise rotation shown in figure 1 (arrow K) of a barycenter point G of the cabin itself in order to reach the neutral position G', in which the cabin C (in position C' indicated by a dotted line in figure 1) is in a position of unstable equilibrium, having G' vertically aligned with the pivot 3.

In addition to such position of equilibrium and up to the limit angle of elevation, namely in a point G'' in addition to G', during the rotation according to the sense of the arrow K, the elastic means 7 are suitable to oppose to a further rotation of the cabin C, in combination with the restraining action performed by the actuators 4, with the belt 11 pulling (towards V2, opposite to V1) and wrapping around the winch 9.

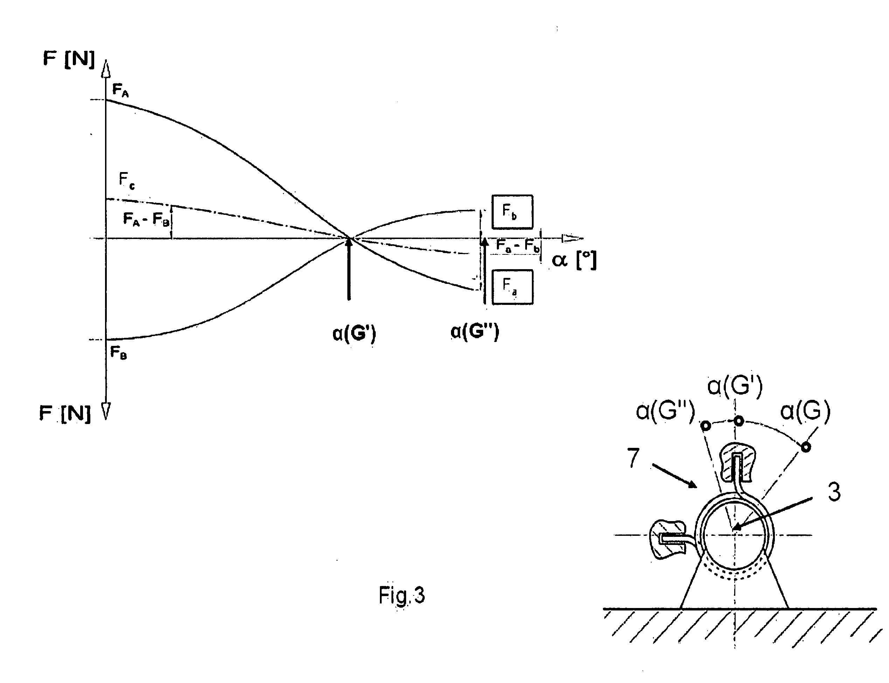

With reference to figure 3, FA indicates the trend of the overall force to be exerted for tilting the cabin as a function of the tilting angle α. As it can be seen, when α = 0 (cabin at rest) the force to be exerted is maximum. Then the force decreases up to the value 0 for α = α (G') in the point of unstable equilibrium, after that it inverts the direction for angles α > α(G'), up to the maximum tilting at the value **Fₐ** corresponding to the angle α - α(G''). An equivalent representation can be seen in figure 3 showing an enlarged view of the pivot point 3. On the other hand, FB indicates the force trend of the spring elastic means 7, which is equivalent to FA but has the opposite sign. The way the elastic means 7 are loaded has to be pointed out. In the cabin neutral position α(G'), the force F_{B} has value zero and it is loaded in a direction up to the maximum value F_{B} when the cabin goes down in the position at rest for α = α(G), while it is loaded in the opposite direction up to the value F_{b} when the cabin is in the tilted position for an angle α = α(G''). Such loading occurs without any need for external energy, being determined just by the cabin's weight. In absolute value, FA > FB, therefore for tilting the cabin it is necessary to apply a further force contribution F_{c} by the actuator means 4, whose value must be higher than the difference FA - FB.

According to what is shown in the enlarged view of figure 1, the elastic means 7 preferably comprise, but are not limited to, a leaf spring 7 of the single-leaf type with folded ends. According to further alternative embodiments, the spring means 7 may comprise a leaf spring of the folded multi-leaf type, or a helical spring, or a torsion bar spring.

In all the possible alternative embodiments, the person skilled in the art is able to choose the type and the dimensions of the spring.

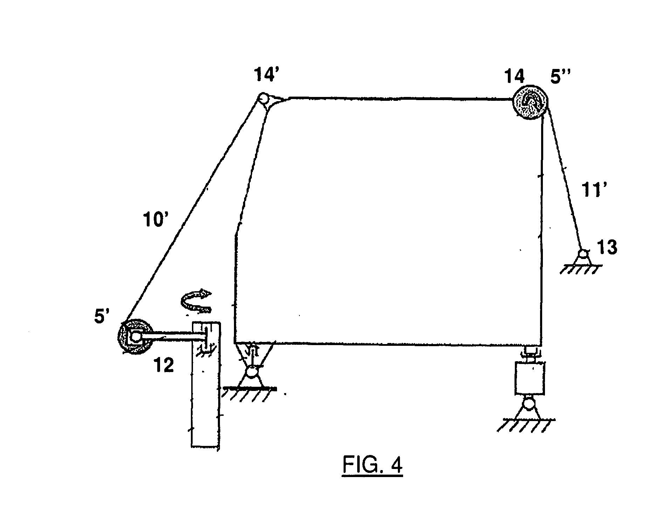

In a further alternative embodiment shown in fig. 4, two electric motors can be present 5', 5" with their respective belts 10', 11' wrapped and unwrapped in opposite directions. For example a motor 5' is fixed on a retractable rod 12, or on a first end 14' of the cabin's profile, and another motor 5'' is fixed to the end 14 of the cabin's profile, or on a fixed point on the frame. The belt 10' wraps and unwraps between the motor 5' and the end 14', while the belt 11' wraps and unwraps between the motor 5" and the end 13.

The electric motor 5' may be replaced by a crank for manually operating the respective winch. In this case the end 14' is provided with spring means, for example a torsion spring, which is loaded during the tilting operation.

The electric motor 5' may be replaced by a torsion spring which is loaded during the tilting operation. The cabin return is then determined by this spring pulling on the belt 11', when the motor or the crank 5' rotates in the opposite direction and releases the belt 10'.

Further alternative embodiments may include motor means, like the aforementioned ones, on both sides of the cabin.

It is worth noting that the mentioned rod 12 can be retractable under the cabin C, as well as all the aforementioned components of the actuators 4 can be integrated or hidden in the structure of the cabin C itself. By introducing the aforementioned actuators 4 and the elastic means 7 acting and disposed on the pivot 3, the device D according to the invention generates the following advantages:
- recovery of the kinetic energy deriving from the weight of the cabin C,
- replacement of the hydraulic or pneumatic cylinder used in the solutions of the prior art with more efficient and lighter means,
- reduction of the overall weight of the cabin C,
- easier and faster tilting and repositioning of the driver's cabin C in its normal position.

## Claims

1. Device (D) for the controlled tilting of the driver's cabin (C) of a transport vehicle, of the type comprising actuator means (4) acting on said cabin (C) in order to allow the rotation of the cabin (C) around a horizontal axis (3), said actuator means (4) comprising motor means (5, 8, 9) and belt means (10,11) acting in correspondence of the profile of said cabin (C) and suitable to wrap around said motor means (5,8,9), **characterized in that** said motor means comprise winch means (8,9) coupled with respective motors (5) in order to determine the rotation of said winch means (8, 9).

2. Device according to claim 1, wherein said belt means (10,11) comprise at least a first belt (10) fixed to a front portion of said cabin (C) and wrapped around at least a first winch (8), and at least a second belt (11) fixed to a point of the vehicle frame (13) on the rear side (CP) of said cabin (C) and wrapped around at least a second winch (9).

3. Device according to claim 2, wherein said at least first and second belt (10,11) are suitable for externally defining respective slip paths (P1,P2) around said cabin (C) in respective opposite traction directions (V1,V2).

4. Device according to claim 3, wherein said winch means (8,9) are placed in correspondence of at least one corner (S1) of an external part of the roof (T) of said cabin (C).

5. Device according to claim 4, wherein an end of said at least first belt (10) is fixed in correspondence of at least a rod (12) connected to said front part (CA), an end of said at least second belt (11) being fixed in correspondence of at least a support (13) that is fixed in correspondence of said rear part (CP).

6. Device according to claim 4, wherein an end of said at least first belt (10) is fixed in correspondence of at least a front cabin support (14'), while another end can be wrapped on said first winch placed on a rod (12) connected to said front part (CA), an end of said at least second belt (11) being fixed in correspondence of at least a support (13) that is fixed in correspondence of said rear part (CP).

7. Device according to claim 1, **characterized in that** said motors (5) are electric motors, possibly being coupled with at least a differential gear (6).

8. Device according to claim 1, **characterized in that** said motors (5) are a manually operated crank of the respective winch.

9. Device according to claim 1, **characterized in that** said motors (5) are a torsion spring that is loaded during the tilting.

10. Device according to any of the previous claim, wherein elastic means (7) are suitable to act on said axis (3) in order to facilitate said tilting in combination with said actuator means (4).

11. Device according to claim 9, wherein said elastic means (7) comprise a leaf spring with at least a single leaf, or helical spring means, or torsion bar spring means.

12. Transport vehicle, in particular for commercial or industrial transport, or specialty vehicle, **characterized in that** it comprises a device for tilting the driver's cabin according to one or more of the previous claims from 1 to 10.

## Patentansprüche

1. Vorrichtung (D) zum gesteuerten Kippen einer Fahrerkabine (C) eines Transportfahrzeuges des Typs, welche Betätigungsmittel (4) aufweisen, die auf die Kabine (C) wirken, um die Drehung der Kabine (C) um eine horizontale Achse (3) zu ermöglichen, wobei die Betätigungsmittel (4) Antriebsmittel (5, 8, 9) und Gurtmittel (10, 11) aufweisen, die entsprechend des Umriss der Kabine (C) wirken und geeignet sind, um die Antriebsmittel (5, 8, 9) herum gewickelt zu werden, **dadurch gekennzeichnet, dass** die Antriebsmittel Windenvorrichtungen (8, 9), die mit den entsprechenden Motoren (5) gekoppelt sind, aufweisen, um die Drehung der Windenvorrichtungen (8, 9) zu bestimmen.

2. Vorrichtung nach Anspruch 1, bei der die Gurtmittel (10, 11) zumindest einen ersten Gurt (10) aufweisen, welcher an einen Frontbereich der Kabine (C) angebracht ist und der zumindest um eine erste Winde (8) gewickelt ist, und zumindest einen zweiten Gurt (11) aufweisen, der an einem Punkt des Fahrzeugsrahmens (13) auf der Rückseite (CP) der Kabine (C) befestigt ist und zumindest um eine zweite Winde (9) gewickelt ist.

3. Vorrichtung nach Anspruch 2, bei der die zumindest ersten und zweiten Gurte (10, 11) geeignet sind, um äußerlich entsprechende Gleitführungen (P1, P2) um die Kabine (C) herum in entsprechend gegenläufigen Traktionsrichtungen (V1, V2) zu definieren.

4. Vorrichtung nach Anspruch 3, bei der die Winden (8, 9) an entsprechend zumindest einer Ecke (S1) eines Außenbereichs des Dachs (T) der Kabine (C) angeordnet sind.

5. Vorrichtung nach Anspruch 4, bei dem ein Ende des zumindest einen ersten Gurts (10) entsprechend an zumindest einer Stange (12) befestigt ist, welche mit dem Frontbereich (CA) verbunden ist, und ein Ende des zumindest zweiten Gurts (11) entsprechend an zumindest einem Stützteil (13) befestigt ist, das entsprechend auf Rückseite (CP) befestigt ist.

6. Vorrichtung nach Anspruch 4, bei dem ein Ende des zumindest ersten Gurts (10) in Verbindung mit zumindest einem vorderen Kabinenträger (14') befestigt ist, während ein anderes Ende um die erste Winde gewickelt sein kann, die auf einer Stange (12) angeordnet ist, welche mit dem Frontbereich (CA) verbunden ist, und ein Ende des zumindest zweiten Gurts (11) in Verbindung mit zumindest einem Träger (13) befestigt ist, der in Verbindung mit dem Heckbereich (CP) befestigt ist.

7. Vorrichtung nach Anspruch 1, **dadurch gekennzeichnet, dass** die Motoren (5) Elektromotoren sind, welche möglicherweise mit zumindest einem Differentialgetriebe (6) gekoppelt sind.

8. Vorrichtung nach Anspruch 1, **dadurch gekennzeichnet, dass** die Motoren (5) manuell bediente Kurbeln der entsprechenden Winde sind.

9. Vorrichtung nach Anspruch 1, **dadurch gekennzeichnet, dass** die Motoren Torsionsfedern sind, die beim Kippen gespannt werden.

10. Vorrichtung nach einem der vorherigen Ansprüche, bei der elastische Mittel (7) derart geeignet auf die Achse (3) wirken, um das Kippen in Kombination mit den Betätigungsmitteln (4) zu vereinfachen.

11. Vorrichtung nach Anspruch 9, bei dem die elastischen Mittel (7) eine Blattfeder mit zumindest einem einzelnen Blatt, Schraubenfedern oder Torsionsstabfedermittel aufweisen.

12. Transportfahrzeug, insbesondere für kommerziellen oder industriellen Transport, oder Spezialfahrzeug, **dadurch gekennzeichnet, dass** es eine Vorrichtung zum Kippen der Fahrerkabine nach einem oder mehreren der vorgenannten Ansprüche 1 bis 10 aufweist.

## Revendications

1. Dispositif (D) pour l'inclinaison contrôlée d'une cabine de conducteur (C) d'un véhicule de transport, du type comprenant un moyen d'actionneur (4) agissant sur ladite cabine (C) pour permettre la rotation de la cabine (C) autour d'un axe horizontal (3), ledit moyen d'actionneur (4) comprenant un moyen moteur (5, 8, 9) et un moyen de courroie (10, 11) agissant en correspondance avec le profil de ladite cabine (C) et apte à s'enrouler autour dudit moyen moteur (5, 8, 9), **caractérisé en ce que** ledit moyen moteur comprend des moyens de winch (8, 9) couplés à des moteurs respectifs (5) pour déterminer la rotation desdites moyens de winch (8, 9).

2. Dispositif selon la revendication 1, dans lequel lesdits moyens de courroie (10, 11) comprennent au moins une première courroie (10) fixée à une portion avant de ladite cabine (C) et enroulée autour d'au moins un premier winch (8), et au moins une deuxième courroie (11) fixée à un point du châssis du véhicule (13) sur le côté arrière (CP) de ladite cabine (C) et enroulée autour d'au moins un deuxième winch (9).

3. Dispositif selon la revendication 2, dans lequel lesdites au moins première et deuxième courroies (10, 11) conviennent pour définir extérieurement des chemins de glissement respectifs (P1, P2) autour de ladite cabine (C) dans des directions de traction respectives opposées (V1, V2).

4. Dispositif selon la revendication 3, dans lequel lesdits moyens de winch (8, 9) sont placés en correspondance d'au moins un coin (S1) d'une partie externe du toit (T) de ladite cabine (C).

5. Dispositif selon la revendication 4, dans lequel une extrémité de ladite au moins une première courroie (10) est fixée en correspondance avec au moins une tige (12) connectée à ladite partie frontale (CA), une extrémité de ladite au moins une deuxième courroie (11) étant fixée en correspondance avec au moins un support (13) qui est fixé en correspondance avec ladite partie arrière (CP).

6. Dispositif selon la revendication 4, dans lequel une extrémité de ladite au moins une première courroie (10) est fixée en correspondance avec au moins un support de cabine avant (14') tandis que l'autre extrémité peut être enroulée sur ledit premier winch placé sur une tige (12) connectée à ladite partie avant (CA), une extrémité de ladite au moins une deuxième courroie (11) étant fixée en correspondance avec au moins un support (13) qui est fixé en correspondance avec ladite partie arrière (CP).

7. Dispositif selon la revendication 1, **caractérisé en ce que** lesdits moteurs (5) sont des moteurs électriques, éventuellement couplés à au moins un engrenage différentiel (6).

8. Dispositif selon la revendication 1, **caractérisé en ce que** lesdits moteurs (5) sont une manivelle actionnée manuellement du winch respectif.

9. Dispositif selon la revendication 1, **caractérisé en ce que** lesdits moteurs (5) sont un ressort de torsion qui est chargé durant l'inclinaison.

10. Dispositif selon l'une quelconque des revendications précédentes, dans lequel des moyens élastiques (7) sont aptes à agir sur ledit axe (3) afin de faciliter ladite inclinaison en combinaison avec ledit moyen d'actionneur (4).

11. Dispositif selon la revendication 9, dans lequel lesdits moyens élastiques (7) comprennent un ressort à lames avec au moins une seule lame, ou un moyen formant ressort hélicoïdal ou un moyen de ressort à barre de torsion.

12. Véhicule de transport, en particulier pour un transport commercial ou industriel, ou véhicule spécialisé, **caractérisé en ce qu'**il comprend un dispositif pour l'inclinaison de la cabine du conducteur selon l'une ou plusieurs des revendications précédentes de 1 à 10.
